# EUROPEAN PATENT APPLICATION

(11) **EP 1 524 107 A1**
(43) Date of publication of application: **20.04.2005**
(21) Application number: 03292595.0
(22) Date of filing: 17.10.2003
(51) Int. Cl.: B32B 27/32, B32B 7/12, B65D 77/20

(54) **Laminated packaging sheet**

(71) Applicant: Amcor Flexibles Europe, 8700 Horsens (DK)
(72) Inventor: Bischoff, Rémy, 61200 Argentan (FR); Jensen, Steffen, 8722 Hedensted (DK)
(74) Representative: Blot, Philippe Robert Emile

(57) **Abstract**

The present invention relates to a laminated packaging sheet (14 ; 114) of the type comprising a support film (24 ; 124) associated to a welding film (26 ; 126) with a permanent adhesive layer (28 ; 128) interposed between the support film (24 ; 124) and the welding film (26 ; 126), at least in predetermined zones, characterized in that said welding film (26 ; 126) is a polyolefin-based film, comprising a high-density polyethylene HDPE.

## Description

The present invention relates to a laminated packaging sheet of the type comprising a support film associated to a welding film, with a permanent adhesive layer interposed between the support film and the welding film, at least in predetermined marked zones.

It also relates to a packaging comprising a film of this type, e.g. a sachet or a container, sealed by a film of this type.

Packagings comprising a packaging film allowing easy opening and reclosing are currently used, for example, to package food products. The structure of a film of this type is described, in particular, in French patent applications FR 95 14117 and FR 00 04155.

In FR 95 14117, the laminated film used to allow opening and reclosing of the packaging comprises two polymer films, between which a permanent adhesive layer is interposed.

One of the films, the "welding film", is intended to be directed towards the inside of the packaging. It is suitable for being welded on the peripheral edge of a container. The other film, the "support film", is intended to form the outer face of the packaging. The welding film consists of a single layer of a same polymer or of a mixture of polymers.

It should be noted that when a packaging of this type is used for packaging foodstuffs, the taste and smell of these foodstuffs may be altered. In particular, the smell and taste of the products may be unpleasant for the user, the user detecting that the foodstuffs preserved in the packaging have a "plastic"- or "petroleum"- like smell or taste.

To avoid this problem, it has been proposed in French application FR 00 0415, to integrate in the welding film means which form a barrier to gases and molecular migration, namely an inner layer made of specific polymer integrated in said welding film, between two layers generally made of polyethylene, especially low density polyethylene LDPE, linear low density polyethylene LLDPE, or medium density polyethylene MDPE.

An object of the invention is to provide a more simple solution to avoid the deterioration in taste and smell of foodstuffs preserved in packagings using at least one packaging film allowing reclosure.

For this purpose, the subject of the invention is a laminated packaging sheet of the aforementioned type, characterized in that its welding film is a polyolefin-based film, comprising a high density polyethylene HDPE.

A further subject of the invention is a packaging device, such as a container or a sachet, comprising an external wall defining an internal cavity with a passage to access to said internal cavity, characterized in that said passage is sealed with a laminated packaging sheet as defined above, said sheet being welded to said external wall on the periphery of said passage, the sheet being contacted with the external wall on the welding film, in an area of the sheet having permanent adhesive.

Contrary to polyethylene without HDPE as contemplated in FR 00 0415, HDPE provides an odor barrier effect, especially due to a lower permeability to aroma and odors.

Thus, in a welding layer comprising HDPE, the presence of a further specific layer insuring an odor barrier effect is described in FR 00 0415, is not necessary.

Besides, welding layer based on HDPE are easier to break that welding layer without HDPE as disclosed in the prior art. In other words, the use of HDPE based welding layer allows an easier opening of packaging device.

According to specific embodiments of the invention, the laminate packaging sheet may comprise one of the following features :
(A) the welding film is a monolayer film comprising a blend of polyolefinic polymers including HDPE.
   I n that case :
   - the monolayer welding film advantageously comprises a blend of HDPE with at least one polyolefinic polymer, selected from the group consisting of low-density polyethylene LDPE, linear low-density polyethylene LLDPE, medium-density polyethylene MDPE, polypropylene PP, and ethylene vinylacetate copolymer EVA.
   - the monolayer welding film preferably comprises from 10% to 90% of HDPE, on the basis of the total weight of the polyolefinic polymer present in said monolayer sealing film. This HDPE content is advantageously of at least 25% and more preferably of at least 30% by weight. Besides, it is generally preferred that this content is of at most 75%, and preferably of at most 60% by weight. Thus, this content may typically be comprised between 40 and 60% by weight;
   - the welding film has a thickness of between 5 and 60 microns, preferably of between 10 and 50 microns, and more advantageously of between 20 and 40 microns ;
   or
(B) the welding film is a bi- or multilayer film, which comprises at least a welding layer and an odor barrier layer, wherein the odor barrier layer is located between the permanent adhesive layer and the sealing layer, and wherein said odor barrier layer is a polyolefin-based layer comprising a high density polyethylene HDPE.
   In that second case :
   - the odor barrier layer advantageously comprises from 10 % to 100% by weight of HDPE, on the basis of the total weight of the polyolefinic polymer present in said odor barrier layer, this content being preferably of at least 30 %, and more advantageously of more than 40%,
   - the odor barrier layer has advantageously a thickness of between 2 and 60 microns, preferably of between 20 and 40 microns, typically of about 30 microns ;
   - the bi- or multilayer welding film is generally obtained by co-extrusion ; as a possible alternative, the bi- or multilayer welding film may be prepared by adhesive lamination.

In the general case, the laminate packaging sheet of the invention may be prepared by an adhesive lamination of the support film, the adhesive layer and the welding film.

According to another specific embodiment of the invention, the laminate packaging sheet is prepared by adhesive lamination of the support film onto a multilayer structure containing the adhesive layer and the welding film, said multilayer structure being advantageously obtained by coextrusion. According to this specific embodiment, the multilayer structure which is adhesive laminated onto the support comprises the adhesive layer between the welding film, and an adhesion film, which is generally a polyolefin-based film. In that case, the adhesive lamination of the multilayer structure onto the support is conducted so as to bring the adhesion film in contact with the support.

As used herein, a "polyolefin-based film" intends to designate a mono-or multilayer film comprising at least one layer including an olefin or a mixture of olefins as a major constituent, representing preferably at least 80%, and advantageously at least 90% by weight of the total weight of said layer. In most cases, a polyolefin-based film in the sense of the instant invention refers to a film comprising at least one layer substantially made of an olefin or of a blend of polyolefins, that is preferably containing at least 95%, more preferably 99%, or even 100% of polyolefins.

As a characteristic feature, the polyolefin-based film present in a sheet according to the invention comprises a high density polyethylene.

The term "high-density polyethylene" (or HDPE) as used in the specification refers to a polyethylene polymer having a density of at least 0.94, and generally of between 0.94 and 0.96, for example between 0,945 and 0,955 (typically of about 0.95). As HDPE polymer useful according to the present invention, mention may especially be made to polyethylene obtained by a polymerization of ethylene at high pressure, typically of more than 1,000 bars (10⁸ Pa), e.g. at 1,500 bars (1.5.10⁸ Pa). HDPE polymers generally have a melting point of at least 125° C, typically of about 130° C.

A "low-density polyethylene" as used hereinafter (or LDPE) is understood to designate polylethylene polymers having a density of at most 0.93, and generally of about 0.92. As examples of such LDPE polymers, mention may be made to polyethylene obtained by the so-called "Ziegler-Natta" or "Philipps" radical polylmerization processes, conducted at the atmosphere pressure or at a lower pressure. LDPE generally has a melting point of less than 125° C, generally between 100 to 120° C.

The term "linear low-density polyethylene" (or LLDPE) refers to specific polymers obtained by polymerizing ethylene e.g. according to processes implemented for the preparation of LDPE, with the further presence of small amounts of α-olefins other than ethylene, e.g. butene, hexene and/or octene, which induces a substantially linear structure for the obtained polymer. LLDPE polymers generally have a density of between 0.90 and 0.94.

The term "medium density polyethylene" (or MDPE) refers to a polyethylene having a density between the density of HDPE and LDPE, that is between 0.93 and 0.94, exclusive, for example between 0.931 and 0.935.

A better understanding of the invention will be facilitated by the following description, given solely be way of example and with reference to the drawings, in which:
- Fig. 1 is a partial view in perspective and cross-section of a packaging container, of which the access passage is sealed by a laminated film according to the invention,
- Fig. 2 is a view similar to that of Fig. 1, after the packaging has been opened ; and
- Fig. 3 and Fig. 4 are views similar to the views of Fig. 1 and 2 respectively, showing another embodiment of the invention.

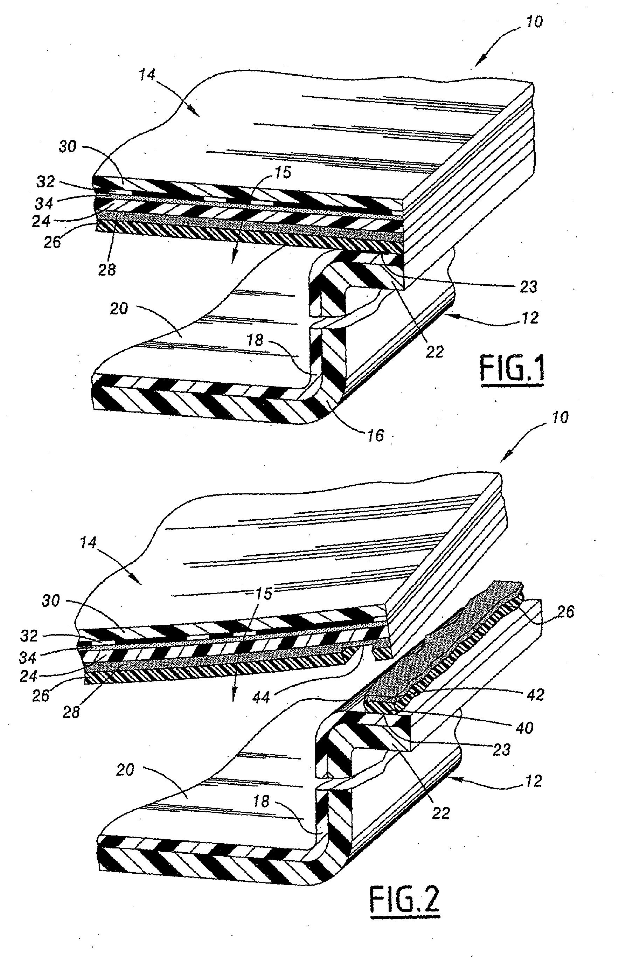

The packaging device 10 represented in Fig. 1 consists of a rectangular container 12 and a flexible cap 14 for sealing a passage 15 for access to the inside of the container.

The container 12 consists of a support layer 16 made from a suitable material, for example from polyvinyl chloride or amorphous polyester (e.g. APET, CPET), covered on its inner surface with a weldable film 18, which may be made, for example, of a polyethylene.

The container defines a receptacle 20, bordered around its entire perimeter by an edge 22, delimiting a flat welding surface of the flexible cap 14, following a rectilinear weld 23.

The cap 14 essentially consists of a support film 24 and a HDPE-containing monolayer welding film 26, with a permanent adhesive layer 28 interposed flat between them over the entire surface. In a variant, the permanent adhesive 28 may be arranged only in predetermined zones of the cap, these zones being intended to form the welding regions of the cap. A permanent adhesive is an adhesive which is still sticky, even after having been separated from a first support.

A transparent film 30 bearing impressions 32 is made integral with the support film 24 by a layer of glue 34, applied on its imprinted face.

According to a variant, the impressions 32 are made on the film 30 and/or 24 on both sides or either side.

The longitudinal weld 23 is obtained by heat-sealing. During sealing, the welding film 18 and the welding layer 36 merge together, allowing a very reliable weld to be obtained after cooling. In particular, the tensile strength of the weld 23 is greater than the tear strength of the welding film 26, the tensile strength of the interfaces between the permanent adhesive layer and films 24 and 26 in contact, and the tensile strength of the heart of the adhesive layer 28.

By way of example, the various layers and films of the cap 14 have the following characteristics:

The support film 24 is a polyester film with a thickness of 36 micrometers.

The permanent adhesive layer 28 is formed by coating with the aid of a liquid or solid adhesive mass.

The permanent adhesive layer may also be applied at elevated temperature, in particular by extrusion.

A permanent adhesive commonly referred to as "hot melt" is ideal for this application. It is possible, in particular, to use PLASTOFLEX 8718, sold by PARAMELT in Holland.

The thickness of the adhesive layer 28 is advantageously between 10 and 30 micrometers, and preferably between 15 and 20 micrometers.

The transparent film 30 is, for example, a polyester film with a thickness of 12 micrometers. This film may have particular functional characteristics, in particular characteristics of tightness vis-à-vis certain gases. For this purpose, it is treated in accordance with known adapted techniques, such as coating or metallization.

The glue used to ensure the link between the film 30 and the support film 24 is of any suitable type, according to the nature of the films to be connected.

The welding film 26 may of course be used with a permanent adhesive layer 28 of any type, as well as with a support film 24 of any appropriate type, the layers 30 and 32 being optional.

The welding film 26 is HDPE-containing film with a thickness of 30 micrometers. The HDPE content is of 60 % by weight on the basis of the total weight of the polyolefinic polymer.

As represented in Fig. 2, when tension is exerted on the cap 14, to open the packaging by raising the cap, the welding film 26 breaks either side of the welded zone.

In this way, the cap 14 is separated from the container 12, along at least one portion of the length of the edge 22. The portion forms a welded cord, marked 40.

The tension causes the permanent adhesive layer 28 to break in its intermediate portion or to delaminate at its interface with the film 24 or the film 26.

For example, a portion, marked 42, of the permanent adhesive layer remains on the welded cord 40, while the complementary portion, marked 44, remains on the support film 24. The two complementary portions 42, 44 each have a thickness that is substantially equal to half the overall thickness of the layer 28.

Thus, when the cap 14 is put back in place, the two portions of the adhesive layer 28 are put back in contact, ensuring that the packaging is reclosed.

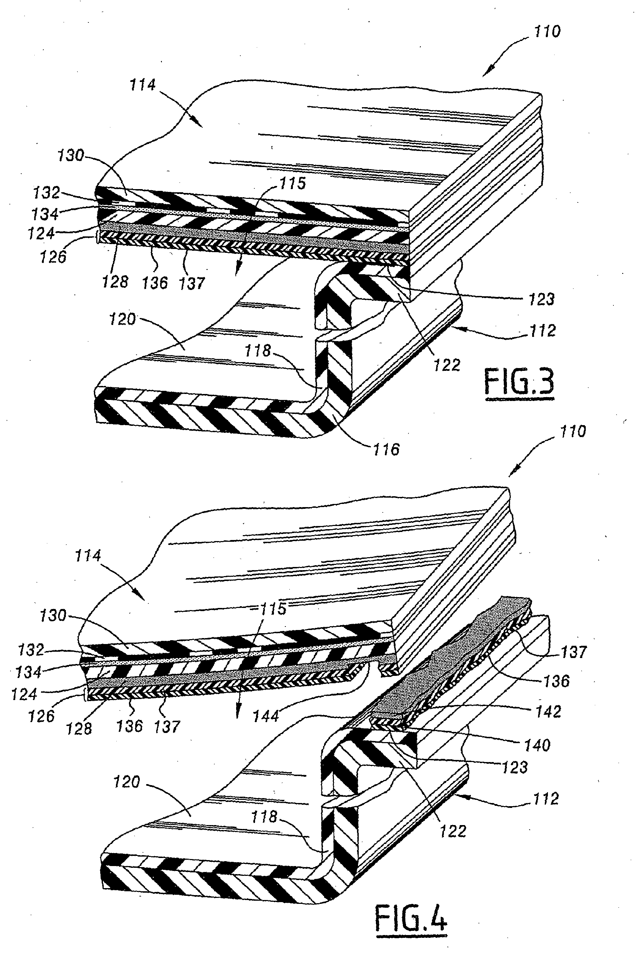

The packaging device 110 represented in Figures 3 and 4 is a packaging analogous to packaging of Figures 1 and 2, differing only by the structure of the welding film layer 126.

The other features of packaging device 110, designated by the references 12, 14, 15, 16, 18, 20, 22, 23, 24, 26, 28, 30, 32 and 34, are similar to those of packaging device 10 and are respectively designated by the references 112, 114, 115, 116, 118, 120, 122, 123, 124, 126, 128, 130, 132 and 134.

In the packaging device 110, the welding film 126 comprises a welding layer 136 that is suitable to form the interior surface of the packaging. The layer is intended to be welded by heat-sealing to the weldable film 118 of the container 112. The welding layer 136 is made of MDPE.

The welding film 126 also comprises an odor barrier layer 137 comprising HDPE. This layer 137, located between the adhesive layer 128 and the welding layer 136, is suitable for blocking the movement of small-size molecules or oligomers.

The welding film 126 may be obtained by coextrusion of the bubble type or cast type, or alternatively by extrusion, coating and layering of each of the layers.

In packaging films as here described such as packaging film present in packaging devices 10 and 110, the welding film based on HDPE forms an effective barrier interposed between the permanent adhesive layer and a sealing layer, which is suitable for ensuring that the taste and/or smell properties of the foodstuffs contained in the packaging do not deteriorate. Besides, the presence of HDPE in the welding film renders the packaging device easy to open.

In the examples described above, the cap is obtained by association with films extruded separately, the films being connected to one another, in particular by gluing. In a variant, the cap is formed by coextrusion of the various films, the layers forming the welding film then being coextruded simultaneously to other films of the cap.

In a variant not shown, the laminated film comprises a permanent adhesive layer only in the regions intended to be welded on the edge of the container. In this case, the support film and the weldable film are connected to each other by a layer of glue of any appropriate type.

The film according to the invention is described here applied to the sealing of a container. However, the film could be used to form a reclosable sachet. In this last case, the permanent adhesive may also be arranged only in the sealing zones of the sachet.

## Claims

1. Laminated packaging sheet (14 ; 114) of the type comprising a support film (24 ; 124) associated to a welding film (26 ; 126) with a permanent adhesive layer (28 ; 128) interposed between the support film (24 ; 124) and the welding film (26 ; 126), at least in predetermined zones, **characterized in that** said welding film (26 ; 126) is a polyolefin-based film, comprising a high-density polyethylene HDPE.

2. Laminated packaging sheet (14) according to claim 1, **characterized in that** the welding film (26) is a monolayer film comprising a blend of polyolefinic polymers including HDPE.

3. Laminated packaging sheet (14) according to claim 2, **characterized in that** the monolayer welding film (26) comprises a blend of HDPE with at least one polyolefinic polymer selected from the group consisting of low-density polyethylene LDPE, linear low-density polyethylene LLDPE, medium-density polyethylene MDPE, polypropylene PP and ethylene-vinylacetate copolymer EVA.

4. Laminated packaging sheet (14) according to claim 2 or 3, **characterized in that** the monolayer welding film (26) comprises from 10% to 90% by weight, and preferably from 40% to 60% by weight, of HDPE, on the basis of the total weight of the polyolefinic polymer present in said monolayer sealing film.

5. Laminated packaging sheet (14) according to claim 2 to 4, **characterized in that** the welding film (26) has a thickness of between 5 and 60 microns, preferably of between 20 and 40 microns.

6. Laminated packaging sheet (114) according to claim 1, **characterized in that** the welding film (126) comprises a welding layer (136) and an odor barrier layer (137), wherein the odor barrier layer (137) is located between the permanent adhesive layer (128) and the sealing layer (136), and wherein said odor barrier layer (137) is a polyolefin-based layer comprising a high density polyethylene HDPE.

7. Laminated packaging sheet (114) according to claim 6, **characterized in that** the odor barrier layer (137) comprises from 10% to 100% by weight of HDPE, on the basis of the total weight of the polyolefinic polymer present in said odor barrier layer.

8. Laminated packaging sheet (114) according to claim 6 or 7, **characterized in that** the odor barrier layer (137) has a thickness of between 2 and 15 microns, typically of about 3 microns.

9. Laminated packaging sheet (114) according to any one of claims 6 to 8, **characterized in that** the welding film (126) is obtained by co-extrusion.

10. Laminated packaging sheet (14 ; 114) according to anyone of claims 1 to 9, **characterized in that** it is obtained :
- by adhesive lamination of the support film (24 ; 124), the adhesive layer (28 ; 128) and the welding film (26 ; 126) ; or
- by adhesive lamination of the support film (24 ; 124) onto a multilayer structure comprising the adhesive layer (28 ; 128) between the welding film (26 ; 126) and an adhesion film, the adhesive lamination of said multilayer structure onto the support being conducted so as to bring the adhesion film in contact with the support.

11. Packaging device (10 ; 110), such as a container or a sachet, comprising an external wall (16 ; 116) defining an internal cavity (20 ; 120) with a passage (15 ; 115) to access to said internal cavity, **characterized in that** said passage is sealed with a laminated packaging sheet (14 ; 114) according to any one of preceding claims, said sheet being welded to said external wall (16 ; 116) on the periphery of said, passage (15 ; 115), the sheet being contacted with the external wall on the welding film (26), in an area of the sheet having permanent adhesive (18 ; 128).

## Amended claims

### Amended claims in accordance with Rule 86(2) EPC.

**1.** In a laminated packaging sheet (14 ; 114) of the type comprising a support film (24 ; 124) associated to a welding film (26 ; 126) with a permanent adhesive layer (28 ; 128) interposed between the support film (24 ; 124) and the welding film (26 ; 126), at least in predetermined zones, the use of a polyolefin-based film, comprising a high-density polyethylene HDPE, as the welding film (26 ; 126) for providing an odor barrier effect.

**2.** A laminated packaging sheet (14) of the type comprising a support film (24) associated to a welding film (26) with a permanent adhesive layer (28) interposed between the support film (24) and the welding film (26), at least in predetermined zones, **characterized in that** the welding film (26) is a monolayer film comprising a blend of HDPE with at least one polyolefinic polymer selected from the group consisting of low-density polyethylene LDPE, linear low-density polyethylene LLDPE, medium-density polyethylene MDPE, polypropylene PP and ethylene-vinylacetate copolymer EVA.

**3.** Laminated packaging sheet (14) according to claim 2, **characterized in that** the monolayer welding film (26) comprises from 10% to 90% by weight of HDPE, on the basis of the total weight of the polyolefinic polymer present in said monolayer sealing film.

**4.** Laminated packaging sheet (14) according to claim 2, **characterized in that** the monolayer welding film (26) comprises from 40% to 60% by weight of HDPE, on the basis of the total weight of the polyolefinic polymer present in said monolayer sealing film.

**5.** Laminated packaging sheet (14) according to claim 2 to 4, **characterized in that** the welding film (26) has a thickness of between 5 and 60 microns, preferably of between 20 and 40 microns.

**6.** A laminated packaging sheet (114) of the type comprising a support film (124) associated to a welding film (126) with a permanent adhesive layer (128) interposed between the support film (124) and the welding film (126), at least in predetermined zones, **characterized in that** the welding film (126) comprises a welding layer (136) and an odor barrier layer (137), wherein the odor barrier layer (137) is located between the permanent adhesive layer (128) and the sealing layer (136), and wherein said odor barrier layer (137) is a polyolefin-based layer comprising a high density polyethylene HOPE, wherein the sheet does not comprise an odor barrier layer comprising a copolymer of ethylene and vinyl alcohol.

**7.** Laminated packaging sheet (114) according to claim 6, **characterized in that** the odor barrier layer (137) comprises from 10% to 100% by weight of HOPE, on the basis of the total weight of the polyolefinic polymer present in said odor barrier layer.

**8.** Laminated packaging sheet (114) according to claim 6 or 7, **characterized in that** the odor barrier layer (137) has a thickness of between 2 and 15 microns, typically of about 3 microns.

**9.** Laminated packaging sheet (114) according to any one of claims 6 to 8, **characterized in that** the welding film (126) is obtained by co-extrusion.

**10.** Laminated packaging sheet (14; 114) according to anyone of claims 2 to 9, **characterized in that** it is obtained :
- by adhesive lamination of the support film (24 ; 124), the adhesive layer (28 ; 128) and the welding film (26 ; 126) ; or
- by adhesive lamination of the support film (24 ; 124) onto a multilayer structure comprising the adhesive layer (28 ; 128) between the welding film (26 ; 126) and an adhesion film, the adhesive lamination of said multilayer structure onto the support being conducted so as to bring the adhesion film in contact with the support.

**11.** Packaging device (10 ; 110), such as a container or a sachet, comprising an external wall (16 ; 116) defining an internal cavity (20 ; 120) with a passage (15; 115) to access to said internal cavity, **characterized in that** said passage is sealed with a laminated packaging sheet (14 ; 114) according to any of claims 2 to 10, said sheet being welded to said external wall (16; 116) on the periphery of said passage (15 ; 115), the sheet being contacted with the external wall on the welding film (26), in an area of the sheet having permanent adhesive (18 ; 128).
